Europäisches Patentamt

European Patent Office

Office européen des brevets

(11) Veröffentlichungsnummer: **0 090 918**
A2

# (12) EUROPÄISCHE PATENTANMELDUNG

(21) Anmeldenummer: 83101050.9

(22) Anmeldetag: 04.02.83

(51) Int. Cl.³: **B 62 K 23/08**

(30) Priorität: 07.04.82 DE 8209966 U

(43) Veröffentlichungstag der Anmeldung:
12.10.83 Patentblatt 83/41

(84) Benannte Vertragsstaaten:
AT BE CH DE FR GB IT LI LU NL SE

(71) Anmelder: Moto-Italia Motorradzubehör GmbH
Böcklerstrasse 7
D-7800 Freiburg(DE)

(72) Erfinder: Ganz, Erich
Breisacherstrasse 135
D-7800 Freiburg(DE)

(74) Vertreter: Patentanwälte Dipl.-Ing. Hans Schmitt
Dipl.-Ing. Wolfgang Maucher
Dreikönigstrasse 13
D-7800 Freiburg i.Br.(DE)

(54) Fusshebel für Motorrad.

(57) Ein Fußhebel für Motorräder hat einen Betätigungshebel, mit dem die Bremse und/oder das Schaltgetriebe über einen Verstellhebel betätigt werden kann. Betätigungs- und Verstellhebel sind dabei relativ zu einem Standpedal gemeinsam schwenkbar. Der Betätigungshebel und der Verstellhebel weisen an ihrer gemeinsamen Schwenklagerung jeweils eine übereinstimmende Innenverzahnung auf, in die eine diese beiden Innenverzahnungen überbrückende Büchse mit einer dazu passenden Außenverzahnung einsteckbar ist. Dadurch ist es möglich, die Winkelstellung von Betätigungshebel und Verstellhebel auf einfache Weise zu verändern, indem die mit Außenverzahnung versehene Büchse entnommen, der Hebel um eine oder mehrere Zahnteilungen verstellt und dann die Büchse zur Arretierung wieder eingefügt wird. Darüber hinaus erlaubt diese Anordnung eine spiegelsymmetrische Verwendung derselben Hebelkonstruktion auf beiden Seiten eines Motorrades.

Fig. 1

EP 0 090 918 A2

PATENTANWÄLTE
DIPL.-ING. H. SCHMITT
DIPL.-ING. W. MAUCHER

78 FREIBURG I. BR. 03. Feb. 1983
DREIKÖNIGSTR. 18
TELEFON: (076 **0090918**
70774

Firma
Moto-Italia
Motorradzubehör GmbH
Böcklerstraße 7
7800 Freiburg i. Br.

UNSERE AKTE · BITTE STETS ANGEBEN:

E 82 546 MR

## Fußhebel für Motorrad

Die Erfindung betrifft einen Fußhebel für Motorräder mit einem Betätigungshebel zum Bremsen und/oder Schalten und mit einem Verstellhebel für ein Brems- oder Schaltgestänge od. dgl., wobei der Betätigungshebel und der Verstellhebel relativ zu einem zum Abstellen des Fußes während der Fahrt dienenden Standpedal gemeinsam schwenkbar sind und an dem freien Ende des Betätigungshebels insbesondere ein Betätigungspedal od. dgl. vorgesehen ist.

Solche Fußhebel sind bekannt. Dabei ist es wünschenswert, wenn das Standpedal und das Betätigungspedal je nach gewünschter Fußstellung des Benutzers gegeneinander verstellt werden können. Eine Verstellung des von dem Verstellhebel ausgehenden Gestänges od. dgl. Übertragungsmittel zum Schaltgetriebe oder zur Bremse ist jedoch unerwünscht.

Zwar sind bereits zweiteilige Fußhebel bekannt, bei denen der Winkel zwischen dem Betätigungshebel und dem Verstellhebel einstellbar ist, jedoch sind dabei bisher aufwendige und teure Lösungen mit Stirnverzahnungen an den beiden gegeneinander verstellbaren Teilen oder mit ineinander steckbaren Verzahnungen, die gleichzeitig verklemmt werden müssen, bekannt geworden. Entsprechend schwierig ist bei diesen bekannten Fußhebeln die Montage und vor allem die individuelle Einstellung auf die je-

/2

weilige Fußstellung eines Benutzers.

Es besteht deshalb die Aufgabe, einen Fußhebel der eingangs erwähnten Art zu schaffen, bei dem die Verstellung des Betätigungshebels und des Verstellhebels zueinander in kleinen Schritten auf einfache Weise - gegebenenfalls auch vom Benutzer selbst - durchgeführt werden kann, wobei gleichzeitig erreicht werden soll, daß der Fußhebel sowohl auf der rechten als auch auf der linken Seite des Motorrades od. dgl. anbringbar ist, ohne daß konstruktive Abwandlungen notwendig sind.

Zur Lösung dieser Aufgabe ist der Fußhebel der eingangs erwähnten Art vor allem dadurch gekennzeichnet, daß der Betätigungshebel und der Verstellhebel an ihrer gemeinsamen Schwenkstelle jeweils eine übereinstimmende, sich von einem zu dem anderen Hebel fortsetzende axiale Innenverzahnung od. dgl. Profilierung aufweisen und daß eine Büchse vorgesehen ist, die eine formschlüssig in die Innenverzahnungen passende Außenverzahnung od. dgl. Profilierung hat und deren Länge wenigstens teilweise über die nebeneinanderliegenden Verzahnungen der beiden Hebel reicht. Dabei kann der Querschnitt der Zähne und der Zahnlücken dreieckförmig sein, wodurch eine sehr enge Zahnteilung mit entsprechend kleinen Verstellschritten von z. B. weniger als 3 mm möglich wird.

Ist die mit einer axialen Außenverzahnung versehene Büchse in die zusammengefügten Hebel eingesteckt, sind diese über die Büchse formschlüssig in Drehrichtung verbunden. Wird die Büchse axial herausgezogen, können die Hebel gegeneinander jeweils um eine Zahnteilung oder mehr verschwenkt und verstellt werden. Durch Einstecken der Büchse wird diese neue Position fixiert. Es ergibt sich also eine sehr einfache Montage und Verstellmöglichkeit. Wird dabei die Büchse mit den sie außerdem noch durchsetzenden Teilen, nämlich einem Haltebolzen für das Fußpedal od. dgl. um 180$^{\circ}$ umgedreht eingeführt, kann der Hebel sofort von einer Seite des Motorrades auf die andere wechseln. Dabei können der Betätigungshebel und der Verstellhebel um mehr als 180$^{\circ}$ gegeneinander verstellbar sein, so daß der an einem Gestänge od. dgl. angreifende, in der Regel kürzere Arm in jede dabei notwendige Position gebracht werden kann, ohne daß an den Befestigungselementen oder den sonstigen zu dem Fußhebel gehörenden Teilen konstruktive Abwandlungen erforderlich sind.

Besonders vorteilhaft ist es, wenn die Büchse über wenigstens eine Stirnseite der Hebel hinaussteht und in dem überstehenden Bereich ein Gewinde für eine Befestigungsmutter hat. Am entgegengesetzten Ende kann die Büchse einen Bund als Widerlager haben.

Vorteilhaft ist es, wenn in die Büchse - wie bereits erwähnt - ein Bolzen paßt, der vorzugsweise an beiden Enden übersteht und jeweils Gewinde einerseits zum Fixieren am Motorradrahmen und andererseits zum Befestigen des Standpedals hat. Der Bolzen kann mit der formschlüssig mit dem Fußhebel verbundenen Hülse das Schwenklager des Fußhebels bilden, so daß er als gleichzeitiger Halter für den Fußhebel selbst und für das Standpedal eine Mehrfachfunktion ausübt.

Vorteilhaft ist es, wenn der insbesondere kürzere Verstellhebel den Betätigungshebel im Bereich des Schwenklagers gabelartig übergreift und in beiden Gabelteilen je eine von der Büchse erfaßte Verzahnung angeordnet ist. Dies ergibt einen symmetrischen Kraftangriff. Darüber hinaus ist es auf diese Weise möglich, die Hebel durch Kaltwalzen herzustellen und die erforderlichen Ausnehmungen auszufräsen, so daß die Teile eine große Festigkeit haben und selbst bei geringen Abmessungen große Kräfte übertragen werden können, ohne daß eine Bruchgefahr besteht. Um Gewicht zu sparen, kann dabei der Fußhebel wenigstens teilweise aus einer Aluminiumlegierung bestehen.

Vor allem bei Kombination einzelner oder mehrerer der vorbeschriebenen Maßnahmen und Merkmale ergibt sich ein Fußhebel, der beidseitig eines Motorrades eingesetzt werden kann und sowohl als Bremshebel als auch als Schalthebel Verwendung finden kann. Dabei können sein Betätigungs- und sein Verstellhebel auf einfache Weise in kleinen Schritten relativ zueinander verstellt werden, so daß die Anpassung an die jeweils gewünschte Fußstellung sogar vom Benutzer selbst durchgeführt werden kann. Die Verwendbarkeit auf beiden Seiten des Motorrades vereinfacht die Herstellung und vermindert die Lagerhaltung.

Nachstehend ist die Erfindung mit ihren ihr als wesentlich zugehörenden Einzelheiten anhand der Zeichnung noch näher beschrieben. Es zeigt:

Fig. 1    eine Seitenansicht eines erfindungsgemäßen Fußhebels mit zugehörigem Gestänge, das jedoch der besseren Übersicht wegen nicht mit dem Fußhebel verbunden ist, sowie

Fig. 2    eine Draufsicht des erfindungsgemäßen Fußhebels, wobei einige Teile der besseren Übersicht wegen getrennt dargestellt sind.

Ein im ganzen mit 1 bezeichneter Fußhebel weist einen Betätigungshebel 2 und einen Verstellhebel 3 auf.

Am freien Ende des Verstellhebels 3 ist eine Lochung 4 vorgesehen, an der ein Gabelkopf 5 eines Gestänges 6 fixiert werden kann, womit ein Umlenkhebel 7 einer Bremse oder einer Schaltung betätigt werden kann.

Wird der Betätigungshebel auf- und abbewegt, ergibt sich eine entsprechende Verschwenkung des Verstellhebels und somit eine entsprechende Bewegung am Gestänge 6.

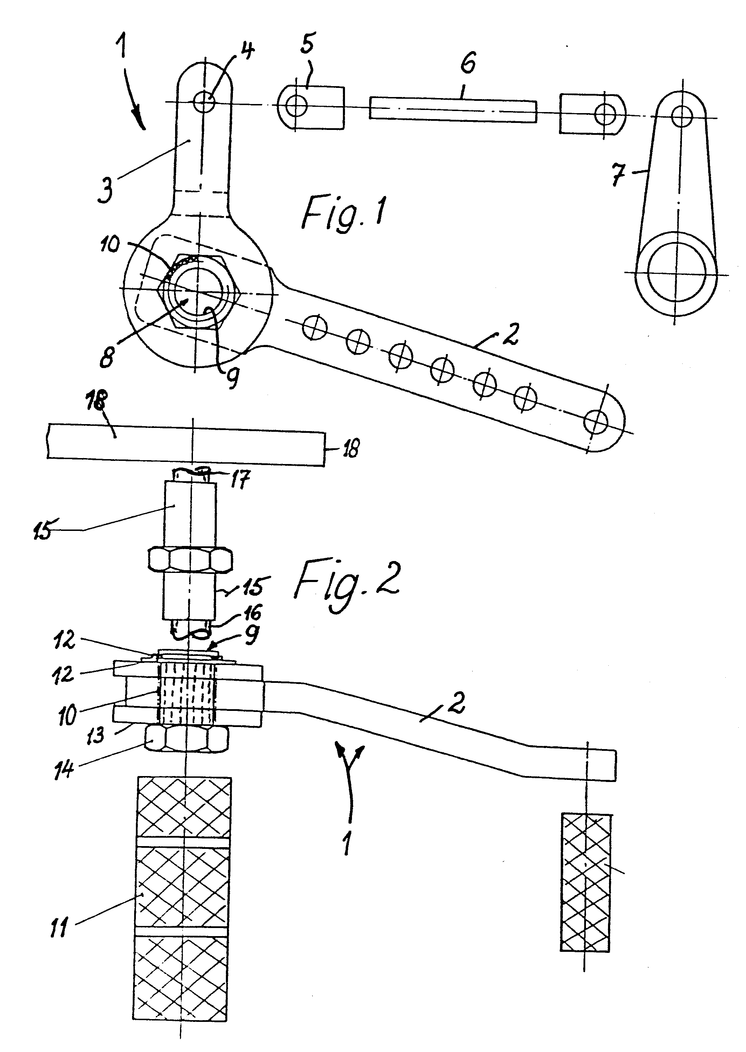

Erfindungsgemäß ist vorgesehen, daß der Betätigungshebel 2 und der Verstellhebel 3 an ihrer noch zu beschreibenden gemeinsamen Schwenklagerung 8 jeweils eine übereinstimmende axiale Innenverzahnung aufweisen und daß eine Büchse 9 vorgesehen ist, die eine formschlüssig in die Innenverzahnungen der Hebel 2 und 3 passende Außenverzahnung hat. In Fig. 2 erkennt man, daß die Länge der Büchse 9 über die nebeneinander liegenden Hebel und somit auch über deren Verzahnungen reicht.

Die ineinandersteckenden Verzahnungen sind in Fig. 1 teilweise angedeutet und mit 10 bezeichnet. Auch in Fig. 2 ist die Verzahnung 10 und deren Kupplung zwischen Büchse und Hebeln durch die strichpunktierte Linie angedeutet. Dabei können zahlreiche und sehr kleine Zähne am Umfang der Büchse 9 und somit auch am Innenumfang der entsprechenden Bohrungen der Hebel 2 und 3 verteilt sein, so daß eine sehr feine Verstellbarkeit entsteht. Wird die Büchse 9 herausgezogen, können die Hebel geringfügig so weit verstellt werden, bis jeweils wieder die Nachbarzähne in Überdeckung sind. Es kann aber auch eine größere Verstellung beispielsweise um nahezu 180° durchgeführt werden, so daß der gesamte Hebel 1 für die andere Seite des Motorrades brauchbar wird. Wird danach die Büchse 9 wieder in die Verzahnungen eingeschoben und somit in Drehrichtung Formschluß zwischen den beiden Hebeln 2 und 3 hergestellt, ist die Verstellung bereits beendet. Dabei kann der Verstellhebel 3 immer die zur Betätigung des Gestänges 6 notwendige Position beibehalten, während der Betätigungshebel 2 in seiner Position verändert wird.

In Fig. 2 erkennt man noch, daß die Büchse 9 an ihrer dem Standpedal 11 abgewandten Seite einen Anschlagbund 12 hat, während sie auf der dem Bund 12 gegenüberliegenden Seite über die Stirnseite 13 des Hebels 1 vorsteht und ein Gewinde hat. Auf dieses Gewinde ist eine Befestigungsmutter 14 geschraubt, wodurch die Büchse in Gebrauchsstellung festgelegt ist.

Durch das Innere der Büchse 9 kann ein Lagerbolzen 15 gesteckt werden, der in Gebrauchsstellung an beiden Enden übersteht und Gewindeteile 16 und 17 hat. Mit dem in Fig. 2 mit 16 bezeichneten Gewindeteil kann das Standpedal 11 aufgeschraubt und also an dem Fußhebel 1 befestigt werden, während der Gewindeteil 17 zum Befestigen des gesamten Hebels 1 an einer Lagerplatte 18 dient.

In Fig. 2 erkennt man außerdem, daß der kürzere Verstellhebel 3 im Bereich der Schwenklagerung 8 den Betätigungshebel 2 gabelförmig umgreift. In beiden Gabelteilen befindet sich je eine von der Büchse 9 erfaßte Verzahnung, so daß ein symmetrischer Kraftangriff entsteht.

Insgesamt ergibt sich ein sehr einfach aufgebauter Fußhebel 1, dessen einzelne Teile schnell miteinander verbunden oder wieder voneinander gelöst werden können, so daß eine Verstellung der beiden Hebel 2 und 3 relativ zueinander sehr einfach möglich ist. Dabei ist auch eine Verstellung in der Weise möglich, daß der Hebel 1 wahlweise auf die eine und andere Seite eines Motorrades paßt.

Alle in der Beschreibung, den Ansprüchen und der Zeichnung dargestellten Merkmale und Konstruktionsdetails können sowohl einzeln als auch in beliebiger Kombination miteinander wesentliche Bedeutung haben.

PATENTANWÄLTE
DIPL.-ING. H. SCHMITT
DIPL.-ING. W. MAUCHER
78 FREIBURG I. BR. 03. Feb. 1983
DREIKÖNIGSTR. 18
TELEFON: (07 **0090918**
70/74

8

Firma
Moto-Italia
Motorradzubehör GmbH
Böcklerstraße 7
7800 Freiburg i. Br.

UNSERE AKTE · BITTE STETS ANGEBEN:

E 82 546 MR

## Fußhebel für Motorrad

### Ansprüche

1.  Fußhebel für Motorrad mit einem Betätigungshebel zum Bremsen und/oder Schalten und mit einem Verstellhebel für ein Brems- oder Schaltgestänge od. dgl., wobei der Betätigungshebel und der Verstellhebel gemeinsam relativ zu einem zum Abstellen des Fußes vor allem während der Fahrt dienenden Standpedal schwenkbar sind und an dem freien Ende des Betätigungshebels insbesondere ein Betätigungspedal od. dgl. vorgesehen ist, d a d u r c h g e k e n n z e i c h n e t , daß der Betätigungshebel (2) und der Verstellhebel (3) an ihrer gemeinsamen Schwenklagerung (8) jeweils eine übereinstimmende Innenverzahnung (10) od. dgl. aufweisen und daß eine Büchse (9) vorgesehen ist, die eine formschlüssig in die Innenverzahnung passende Außenverzahnung od. dgl. hat und deren Länge wenigstens teilweise über die nebeneinander liegenden Verzahnungen der beiden Hebel (2) (3) reicht.

2.  Fußhebel nach Anspruch 1, dadurch gekennzeichnet, daß der Querschnitt der Zähne und der Zahnlücken der Verzahnungen dreieckförmig ist.

3.  Fußhebel nach Anspruch 1 oder 2, dadurch gekennzeichnet, daß die Zahnteilung der Verzahnung weniger als 3 mm beträgt.

4. Fußhebel nach einem der Ansprüche 1 bis 3, dadurch gekennzeichnet, daß der Betätigungshebel (2) und der vorzugsweise winklig dazu stehende Verstellhebel (3) um mehr als 180° gegeneinander verstellbar sind.

5. Fußhebel nach einem der Ansprüche 1 bis 4, dadurch gekennzeichnet, daß die Büchse (9) über wenigstens eine Stirnseite (13) der Hebel (2, 3) hinaussteht und in dem überstehenden Bereich ein Gewinde od. dgl. insbesondere für eine Befestigungsmutter (14) sowie am anderen Ende vorzugsweise einen Bund (12) od. dgl. Widerlager hat.

6. Fußhebel nach einem der Ansprüche 1 bis 5, dadurch gekennzeichnet, daß in die Büchse (9) ein Bolzen (15) paßt, der vorzugsweise an beiden Enden über die Büchse (9) übersteht und Gewindeteile (16, 17) einerseits zum Fixieren am Motorrad und andererseits zum Befestigen des Standpedales (11) hat.

7. Fußhebel nach einem der Ansprüche 1 bis 6, dadurch gekennzeichnet, daß der Bolzen (15) mit der Büchse oder Hülse (9) das Schwenklager (8) des Fußhebels (1) bildet.

8. Fußhebel nach einem der Ansprüche 1 bis 7, dadurch gekennzeichnet, daß der insbesondere kürzere Verstellhebel (3) den Betätigungshebel (2) im Bereich des Schwenklagers (8) gabelartig umgreift und in beiden Gabelteilen je eine von der Büchse (9) erfaßte Verzahnung aufweist.

9. Fußhebel nach einem der vorstehenden Ansprüche, dadurch gekennzeichnet, daß er wenigstens teilweise aus einer Aluminiumlegierung besteht.

0090918

*Fig. 1*

*Fig. 2*

Moto-Italia